# EUROPÄISCHE PATENTSCHRIFT

(11) **EP 0 425 757 B1**
(45) Veröffentlichungstag und Bekanntmachung des Hinweises auf die Patenterteilung: **08.09.1993**
(21) Anmeldenummer: 90109864.0
(22) Anmeldetag: 23.05.1990
(51) Int. Cl.: C02F 11/12, B01D 25/12, B30B 9/26

(54) **Vorrichtung zum Entwässern von Schlamm**
Device for removal of water from sludge
Dispositif de déshydratation de la boue

(30) Priorität: 03.11.1989 CH 3982/89
(43) Veröffentlichungstag der Anmeldung: 08.05.1991
(73) Patentinhaber: HOPPE + PARTNER, CH-6301 Zug (CH)
(72) Erfinder: Hoppe, Willy Franz, CH-6330 Cham (CH)
(74) Vertreter: Patentanwälte Schaad, Balass, Menzl & Partner AG

(56) Entgegenhaltungen:
- EP-A- 0 102 615
- EP-A- 0 264 899
- CH-A- 671 218
- DE-A- 1 536 896

## Beschreibung

Die Erfindung betrifft eine Vorrichtung zum Entwässern von Schlamm nach dem Oberbegriff von Anspruch 1.

Ein Verfahren bzw. eine Vorrichtung dieser Art ist aus der EP-A 0 337 218 bekannt geworden. Hierbei enthält der Ringraum eine Mehrzahl wendelförmiger Umgänge des eine zusammenhängende Schlammschicht tragenden endlosen Bandes. Dieses tritt oben in den Entwässerungsturm ein, wird im Ringraum mit Schlamm beladen und nimmt zusammen mit der Schlammschicht an der Drehung des Bodens und des Innenmantels unter Bildung eines wendelförmigen Umganges teil, der sich auf die schon vorhandene Säule legt. Durch eine am unteren Ende des Ringraumes vorgesehene Austrittsöffnung tritt das Band mit der untersten Schlammlage aus dem Turm aus, so dass die wendelförmigen Umgänge aus Band und Schicht innerhalb dieses Ringraumes absinken. Während dieses Vorganges wird unter dem Gewicht des darüber liegenden Schlammes das in den Schlammlagen enthaltene Wasser in das Band verdrängt und von diesem in Auskleidungen des Ringraumes aus Transmissivitätspaketen abgeleitet. Ausserhalb des Turmes wird der nunmehr stichfeste Schlamm vom Band entfernt und dieses nach Reinigung wieder zum Eintritt in den Turm geführt.

Mit dieser Einrichtung wird zwar der manuell zu leistende Arbeitaufwand bei der Schlammentwässerung weitgehend vermieden. Insbesondere bei Abmessungen der Vorrichtung, wie solche zur Bewältigung von grossen anfallenden Schlammmengen notwendig sind, ist jedoch ein störungsfreier Betrieb nicht gewährleistet.

Aufgabe der Erfindung ist deshalb, eine Vorrichtung zu schaffen, die in relativ kurzer Zeit grosse Volumina störungsfrei verarbeiten kann und mit geringem Energieaufwand die Entwässerung bis zum stichfesten Schlamm gestattet.

Die Lösung der erfindungsgemässen Aufgabe gelingt mit den Mitteln des Kennzeichens von Anspruch 1.

Hiermit sind die Voraussetzungen geschaffen, um bei den für die industrielle Verwendung gegebenen grossen Abmessungen der Vorrichtung ein herstellbares und im Betrieb beherrschbares Band einzusetzen. Da beide seitlichen Begrenzungen des Ringraumes am Umlauf der wendelförmig aufgebauten Säule aus Schlamm und Band teilnehmen, die vom Boden antreibend unterstützt wird, entstehen keine durch den Antrieb zu kompensierende Reibungsverluste an diesen Begrenzungen. Am Band wirken demnach keine Kräfte in Umfangsrichtung ein, die die Lage der einzelnen Abschnitte in dieser Richtung unmittelbar beeinflussen könnten.

Gemäss einer bevorzugten Ausführungsform der Erfindung sind oberhalb der Oeffnung am unteren Ende des Ringraumes Lastabfangmittel vorgesehen, welche die Last des im Ringraum befindlichen Schlammes sowie eines allenfalls vorhandenen Zusatzgewichtes aufnehmen und den Durchgang von Schlamm und Band duch die Oeffnung in von dieser Last befreitem Zustand ermöglichen.

Es entspricht einer vorteilhaften Weiterbildung der Erfindung, als Lastabfangmittel den Boden oberhalb der die Austrittsöffnung des Bandes aus dem Turm bildenden Oeffnung anzuordnen. Dies gestattet, das Band zusammen mit der Schlammschicht aus dem eigentlichen Ringraum nach abwärts in eine drucklose Zone zu führen, in welcher der Austritt aus dem Turm unbelastet erfolgen kann.

Im Zusammenhang mit einem über der Austrittsöffnung angeordneten Boden, der zusammen mit den seitlichen Begrenzungen des Ringraumes umläuft, ist bei einer vorzugsweisen Ausgestaltung der Erfindung dieser Boden als Rost mit radial verlaufenden Elementen ausgestaltet, welche einzeln zwischen einer Betriebslage und einer unwirksamen Lage radial verschiebbar sind, um in der letzteren eine Durchtrittsöffnung für das Band zu bilden, die trotz Drehung des Bodens als Ganzes stationär gehalten werden kann.

Um das Abfliessen von auf das Band aufgegebenem Schlamm nach der Seite zu vermeiden, ist - gemäss einer weiteren bevorzugten Ausführungsform der Erfindung - die Breite des Bandes grösser als der Abstand zwischen den seitlichen Begrenzungen, jedenfalls in jenem Höhenbereich des Ringraumes, in welchem noch mit einem seitlichen Austritt von Schlammwasser aus der Schlammlage zu rechnen ist und das Band wird in den Ringraum so eingeführt, dass dessen Längsränder zur Bildung eines U-oder trogförmigen Profiles aufgebogen werden. Damit wird die Schlammlage seitlich ebenfalls durch das Band begrenzt und ein Absetzen von Schlamm am Aussen-und/oder Innenmantel bzw. in diesen gegebenenfalls zugeordneten Auskleidungen vermieden.

Es entspricht einer vorteilhaften Ausgestaltung der Erfindung, wenn der zylindrische Ringraum oberhalb des Bodens gegenüber der Breite am oberen Ende dieses Raumes so erweitert ist, dass sich die Längsränder des Bandes jedenfalls auf dem Boden flach legen können, wodurch der Austritt des Bandes aus dem Turm bzw. der Durchtritt durch den Boden erleichtert wird.

Es ist gleichfalls bevorzugt, bei einem zusammenhängenden Band dieses zum Oeffnen und Schliessen auszubilden, um bei Inbetriebnahme der Vorrichtung ein Einführen des offenen Bandes durch den Turm zu ermöglichen und das Band erst danach zu schliessen.

Nach einer vorzugsweisen Ausgestaltung der Erfindung ist das Transmissivitätspaket des Bandes in relativ kurze Abschnitte unterteilt, die sich der wendelförmigen, gekrümmten Bahn im Ringraum bzw. im Turm mit wenig Deformationsarbeit anpassen.

Die Abschnitte des Bandes weisen gemäss einer bevorzugten Ausführungsform der Erfindung in im Ringraum ausgelegtem Zustand radial verlaufende Begrenzungen auf, wobei sich folgende Abschnitte mit ihren benachbarten Begrenzungen aneinander anschliessen.

Die Abschnitte sind gemäss einer vorzugsweisen Ausführungsform der Erfindung mit einem einen gemeinsamen Teil des Bandes bildenden Verbindungs- und Führungsorgan zusammengehalten, mit welchem die Abschnitte entlang einer in Bandlängsrichtung verlaufenden Seite verbunden sind, wobei vorzugsweise die Bandabschnitte lösbar miteinander und mit dem Verbindungsorgan verbunden sind, so, dass ein Auswechseln beschädigter Abschnitte mit geringem Aufwand möglich ist.

Nachfolgend sind mehrere für die Entwässerung von Erdschlammm dienende beispielweise Ausführungformen der Vorrichtung nach der Erfindung, teilweise anhand der Zeichnung, erläutert. Es zeigen:
- Fig. 1: schematisch die Vorrichtung gemäss der ersten Ausführungsform, teilweise im Aufriss und teilweise im Vertikalschnitt;
- Fig. 2: die Vorrichtung nach Fig. 1 im Grundriss;
- Fig. 3: den Turm nach den Fig. 1 und 2 im Vertikalschnitt;
- Fig. 4: den Bandaustritt im Grundriss;
- Fig. 5: einen Vertikalschnitt entlang Linie V-V in Fig. 6;
- Fig. 6: den Bandaustritt im Grundriss;
- Fig. 7: das Band in Draufsicht;
- Fig. 8: schematisch einen Entwässerungsturm nach einer weiteren Ausführungform im Vertikalschnitt;
- Fig. 9: einen Horizontalschnitt entlang Linie IX-IX in Fig. 8 und
- Fig. 10: eine Darstellung der Durchtrittsverhältnisse durch den Boden im Vertikalschnitt.

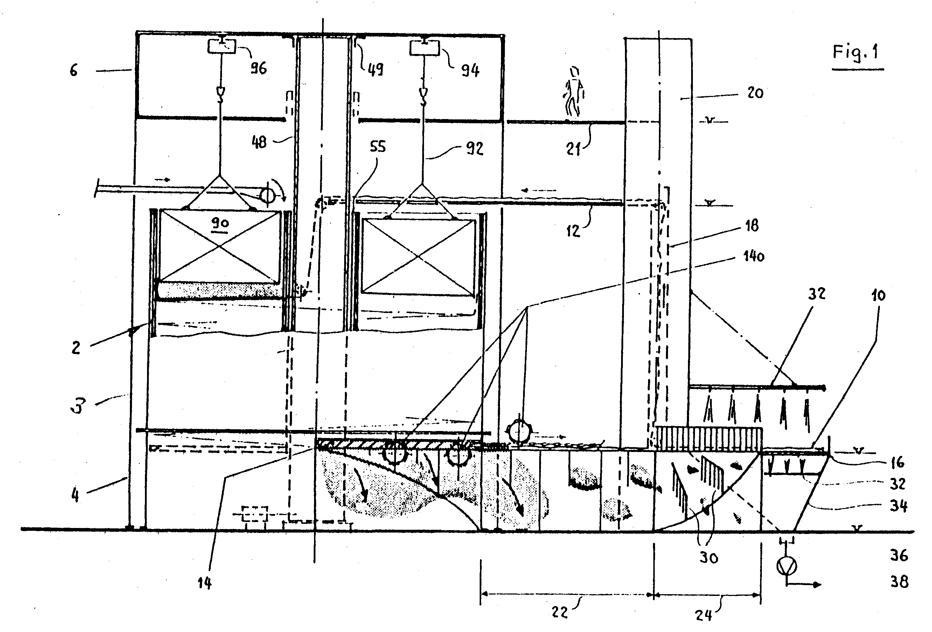

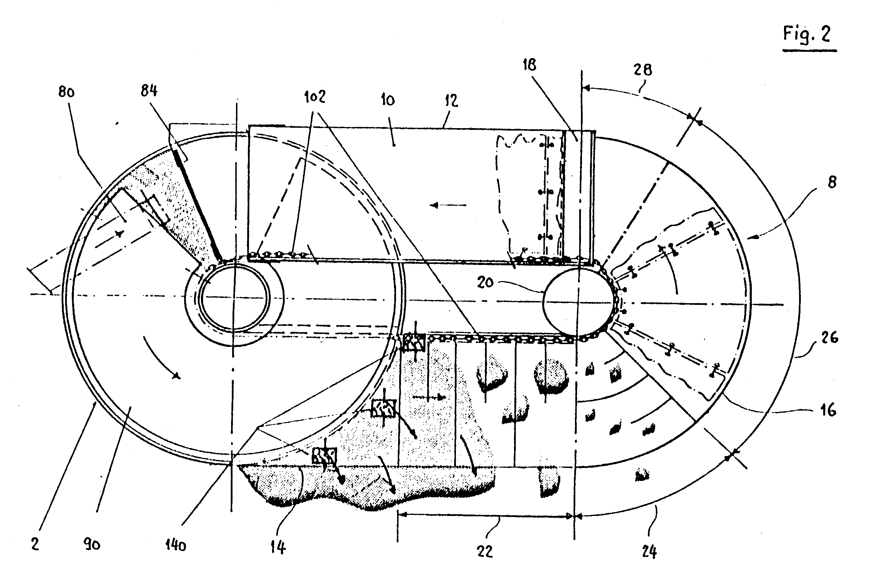

Mit 2 ist in der Zeichnung ein Entwässerungsturm der Vorrichtung bezeichnet, der von einem eine Kranbühne 6 (Fig. 1) tragenden Gerüst 4 umschlossen ist. An den nachfolgend 'Turm' genannten Entwässerungsturm 2, der eine zylindrische Aussenwand 3 aufweist, schliesst sich nach der einen Seite eine im Grundriss Teil eines Ovales bildende, allgemein mit 8 bezeichnete Führungsbahn (Fig. 2) für ein endloses Band 10 an, das in noch näher zu beschreibender Weise durch den Turm 2 geführt ist. Die Führungsbahn 8 umfasst einen etwa horizontal verlaufenden und z.B. durch Stützschienen oder ein Podest gebildeten Einlaufabschnitt 12, der über dem Turm 2 endet. Weiterhin ist an den Turm 2 ein Austragtisch 14 angeschlossen, über welchen das Band 10 zu einer halbkreisförmigen Plattform 16 geführt ist. Die Plattform 16 ist über einen Steigschacht 18 mit dem Einlaufabschnitt 12 verbunden. Der Steigschacht 18 schliesst seitlich an einen Pylon 20 an, der auch die Stützschienen des Einlaufabschnittes 12 an deren äusseren Enden trägt.

Mit dem nach aussen abwärts geneigten Austragtisch 14 arbeitet in einem Bereich 22 eine nicht dargestellte Entladevorrichtung zusammen, die beispielsweise mit einem von unten auf das Band 10 einwirkenden Rüttler ausgestattet ist.

Auf der Plattform 16 ist ein an den Austragtisch 14 anschliessender Bereich 24 vorgesehen, der das Band 10 wiederum in eine horizontale Lage zurückführt. Dem Bereich 24 sind Abstreiforgane 30 zugeordnet, die der Vorreinigung des Bandes 10 dienen.

Ein an den Bereich 24 anschliessender Bereich 26 dient als Waschstrecke und ist mit einer Mehrzahl von sich radial über die Breite des Bandes 10 erstreckenden Sprührohren 32 besetzt. Die an eine Quelle von unter Druck stehendem Waschwasser angeschlossenen Sprührohre 32 sind sowohl oberhalb als auch unterhalb des Bandes 10 angeordnet und weisen gegen dieses gerichtete Sprühdüsen auf. Unterhalb des Bereiches 26 bzw. der Waschstrecke ist ein Sammelbecken 34 für das verbrauchte Waschwasser vorgesehen, das mittels einer an einen Auslass 36 angeschlossenen Pumpe 38 einem nicht dargestellten Absetzbecken zugeführt werden kann.

Der letzte auf der Plattform 16 gebildete Bereich 28 ist einer Arbeitsstation reserviert, an welcher notwendige Unterhaltsarbeiten am Band, durchgeführt werden können.

Im Pylon 20, an welchem die Sprührohre 32 der Waschstrecke angeschlossen sind, ist eine nicht dargestellte Leiter oder Treppe vorgesehen, um einen zur Kranbühne 6 führenden Gehsteg 21 erreichbar zu machen.

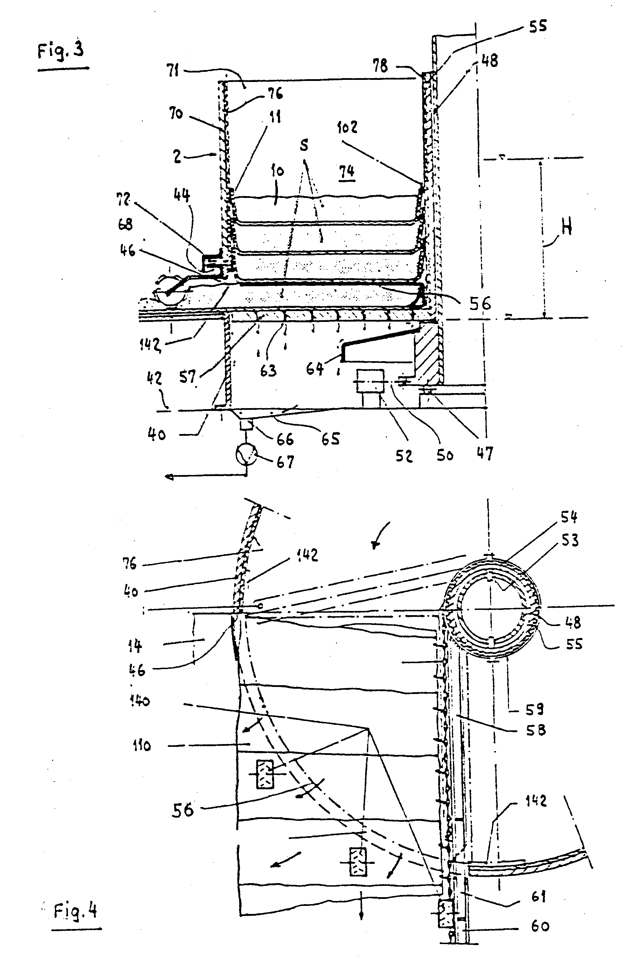

Die Aussenwand 3 des Entwässerungsturmes 2 besitzt, wie aus Fig. 3 ersichtlich, einen durch eine Stehzarge 40 gebildeten unteren Teil, der stationär auf einem Fundament 42 abgestützt ist. Die Stehzarge 40 enthält unterhalb eines an dessen freiem Ende angebrachten Lagerringes 44 eine in Umfangsrichtung der Zarge 40 etwa über 90° horizontal verlaufende Austrittsöffnung 46, an welche der Austragtisch 14 anschliesst. Im Zentrum der Stehzarge 40 ist auf einem auf dem Fundament 42 vorgesehenen, durch eine Kugel angedeuteten Lager 47 eine aufrechte hohle Antriebsachse 48 drehbar abgestützt, deren oberes Ende bei 49 in der Kranbühne 6 drehbar gelagert ist. Die Antriebsachse 48 ist über einen Kettentrieb 50 mit einer einen elektrischen Antriebsmotor und ein Untersetzungsgetriebe aufweisenden Antriebseinheit 52 verbunden, um die Antriebsachse in einer vorbestimmten Drehrichtung anzutreiben, z.B. in bezug auf Fig. 4 im Gegenuhrzeigersinn. Auf der Antriebsache 48 axial verschiebbar ist eine mit dieser über in Axialnuten 53 eingreifende Mitnehmer 54 drehstarr verbundene Hohlwelle 55 vorgesehen. Ueber die Mitnehmer 54 ist die Hohlwelle 55 mit einem in der Antriebsachse 48 angeordneten, nicht dargestellten, z.B. hydraulischen Hubmechanismus verbunden und über eine bei H angezeigte Hubhöhe verschiebbar.

Die Hohlwelle 55 trägt, mit dieser drehstarr verbunden, einen Boden 57, der in der in Fig. 3 dargestellten unteren Endlage derselben dem unteren Rand der Austrittsöffnung 46 unmittelbar benachbart ist. Der kreisringförmige Boden 57 ist mit Durchtrittsöffnungen 63 versehen. An die Antriebsachse 48 schliesst flüssigkeitsdicht eine mit dieser starr verbundene Ablenkschürze 64 an. Eine ringförmige Sammelrinnne 65 am Fuss der Stehzarge 40 ist mit einem Ablaufsystem 66 verbunden, das gegebenenfalls mit einer Wasserpumpe 67 versehen sein kann und ebenfalls mit einem nicht dargestellten Absetzbecken in Verbindung steht.

Am Lager 44 der Stehzarge 40 ist über ein Lager 68 der einen Aussenmantel 70 bildende obere Teil der Aussenwand 3 mittels eines an dessen unterem Ende vorgesehenen Lagerringes 72 drehbar abgestützt und geführt. Der Aussenmantel 70, der koaxial zur Antriebsachse 48 angeordnet ist, begrenzt zusammen mit dem oberen Ende der Stehzarge 40 und der einen Innenmantel bildenden Hohlwelle 55 einen zylindrischen Ringraum 74, dessen Aussendurchmesser etwas grösser als derjenige des Bodens 57 ist. Der Durchmesserunterschied zwischen diesen Teilen reicht aus, um trotz einer Auskleidung 76 an der Innenfläche des Aussenmantels 70 den ungehinderten Durchtritt des Bodens 57 zuzulassen. Die Auskleidung 76 reicht bis in die Stehzarge 40 und lässt lediglich die Austrittsöffnung 46 frei. An der Aussenseite des Innenmantels 55 ist ebenfalls eine mit 78 bezeichnete Auskleidung vorgesehen, die wie die Auskleidung 76 aus einem mindestens zweilagigen Transmissivitätspaket besteht. Dabei ist je eine äussere Filterlage und eine dem jeweiligen Mantel unmittelbar benachbarte eigentliche Ableitlage vorgesehen, die beide in bekannter Ausgestaltung aus Vliesmaterial gebildet sind. Durch nicht dargestellte Mittel steht die Antriebseinheit 52 auch mit dem Aussenmantel 70 in Antriebsverbindung und zwar so, dass dieser im Betrieb mit der gleichen Drehzahl wie der Innenmantel 55 angetrieben wird.

Auf dem Boden 57 ist ein Abstreifbalken 58 (Fig. 4) frei gleitend abgestützt, der vermittels eines den Innenmantel 55 bzw. die Auskleidung 78 lose drehbar umgebenden Führungsringes 59 etwa tangential zur ersteren ausgerichtet gehalten wird. In seiner Höhe enspricht der Abstreifbalken 58 etwa der Dicke der noch nicht entwässerten Schlammschicht. Eine sektorförmige Platte 56 (Fig. 3), deren Umrisse in Fig. 4 strichpunktiert dargestellt sind, ist in horizontaler Lage einerseits am Abstreifbalken 58 und andererseits von an der Stehzarge mittels befestigter, nicht dargestellter Stützarme an der Stehzarge 40 abgestützt. Die Platte 56 bildet ein Lastabfangmittel, das sich oberhalb der Austrittsöffnung mindestens über deren Umfangsbereich erstreckt. Der Austrittsöffnung 46 benachbart endet ein ebenfalls tangential zur Hohlwelle 55 ausgerichteter Führungsbalken 60, in welchem ein zur Blockierung des Abstreifbalkens 58 in der Betriebslage dienender Riegel 61 verschiebbar angeordnet ist.

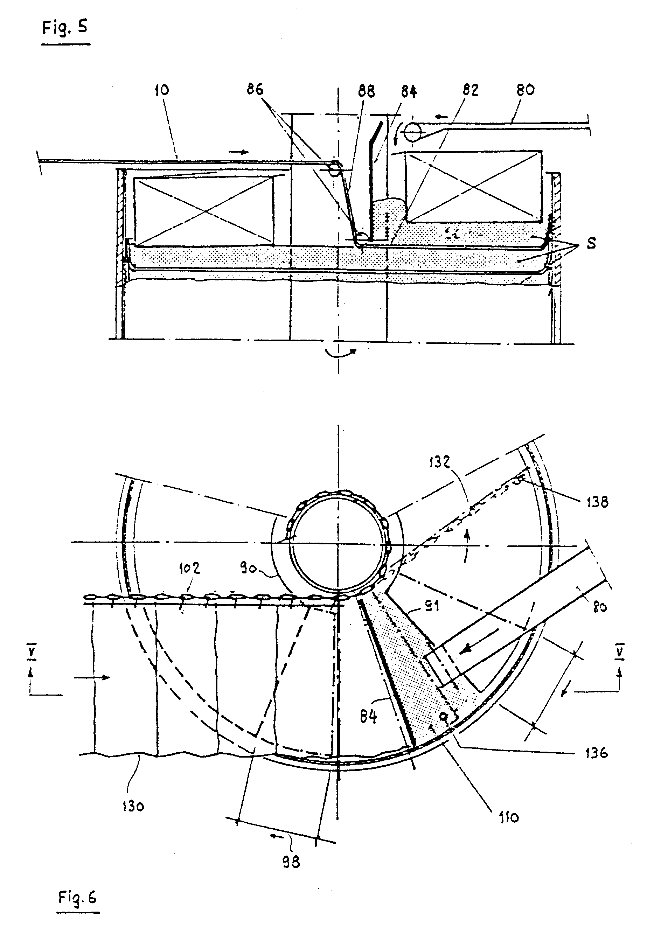

Wie aus den Fig. 3 und 5 weiter ersichtlich ist, verläuft im Betrieb der Vorrichtung das mit einer Schlammschicht S beladene Band 10 wendelförmig durch den Turm 2 bzw. dessen Ringraum 74. Die Längsränder 11 desselben sind an den benachbarten Auskleidungen 76 und 78 aufgebogen, so dass die Schlammlage allseitig vom Band 10 eingeschlossen ist. Dabei ist der Innenmantel 55 von einer ein Verbindungsorgan des Bandes 10 bildenden Kette 102 umschlungen. Dem oberen offenen Ende des Turmes 2 ist ein Transportband 80 (Fig. 5 und 6) zugeordnet, das der Zufuhr von zu entwässerndem Schlamm zu einer im Ringraum 74 liegenden Aufgabestelle 82 auf dem Band 10 dient. Die Aufgabestelle 82 folgt unmittelbar einer durch Umlenkwalzen 86 gebildeten Einführstrecke 88 des Bandes 10 vom Einlaufabschnitt 12 durch das offene Ende des Turmes 2 in den Ringraum 74. Der Aufgabestelle 82 ist dabei eine Trennwand 84 zugeordet, die die Bildung eines Schüttkegels an der Aufgabestelle verhindert und das störungfreie Einführen des Bandes 10 ermöglicht.

Aus den Fig. 5 und 6 ergibt sich weiter, dass die Einführstrecke 88 und die Aufgabestelle 82 in einer sektorförmigen Ausnehmung 91 eines ringförmigen Gewichtes 90 vorgesehen sind, das auf der obersten Schlammschicht S aufliegt. Das als Hohlkörper ausgebildete Gewicht 90 gestattet die Aufnahme einer wählbaren Wassermenge, um die von diesem auf den Schlamm ausgeübten Presskraft z.B. einer bestimmten Schlammart anzupassen. Um ein Abheben und Drehen des Gewichtes 90 von Aussen zu ermöglichen, ist dieses über mehrere am Umfang verteilte, im Betrieb entlastete Tragseile 92 (Fig. 1) mit Laufkatzen 94 verbunden, die an einer kreisförmigen Schiene 96 über unter sich gleich grosse Winkelabschnitte verfahrbar sind. Die Schiene 96 ist koaxial zur Antriebsachse 48 an der Kranbühne 6 angebracht. Jede der Laufkatzen 94 weist neben einem Hubantrieb einen Fahrantrieb (beide nicht dargestellt) auf, der an allen Laufkatzen gleichzeitig ein- und ausschaltbar ist und gleichsinnig wirkt. Im angehobenen Zustand des Gewichtes 90 ist damit dessen Verdrehung um einen Schrittschaltweg 98 (Fig. 6) entgegen der vorbestimmten Drehrichtung der Antriebsachse 48 möglich. Der Schrittschaltweg entspricht in seiner Grösse jener der Winkelabschnitte. Alle Laufkatzen 94 sind mit einer gemeinsamen, nicht dargestellten, manuell oder automatisch betätigbaren Schaltvorrichtung verbunden. Damit kann über den Hubantrieb das Gewicht 90 von der Schlammschicht S abgehoben und über den Fahrantrieb die Verdrehung desselben um den Schrittschaltweg 98 eingeleitet werden bzw. der Fahrantrieb unterbrochen und das Gewicht über den Hubantrieb abgesenkt werden. Der Sinn dieser Verdrehung wird weiter unten verdeutlicht.

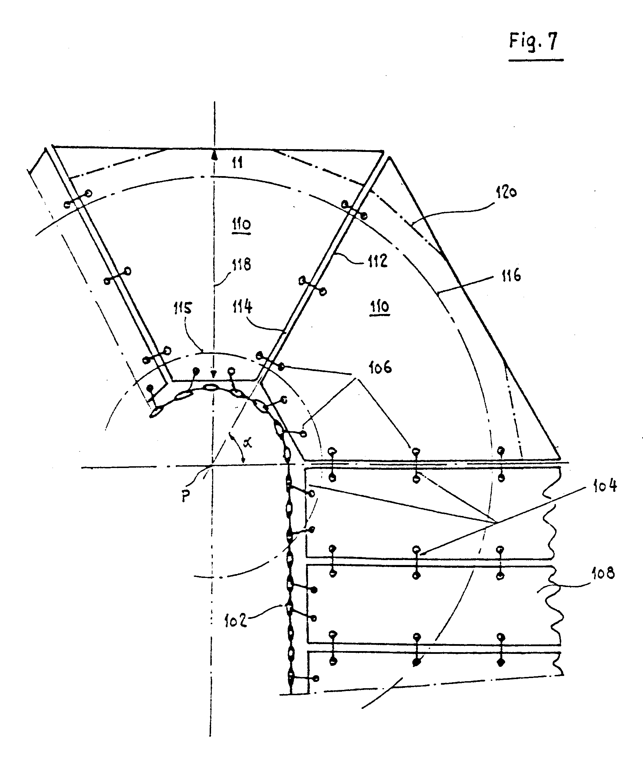

In Fig. 7 ist das Band 10 im Grundriss dargestellt und zwar teilweise in flächig ausgebreitetem und teilweise in längsgestrecktem Zustand. Wie ersichtlich, weist das Band in seinem für die Entwässerung massgeblichen Teil einzelne Abschnitte 110 auf, deren Erstreckung in Bandlängsrichtung grundsätzlich so gewählt ist, dass abgesehen von der Herstellbarkeit das Band auch dem vorgesehenen wendelförmigen Verlauf entsprechend im Ringraum plaziert und darüberhinaus ohne Probleme auch ausserhalb des Turmes umlaufend bewegt werden kann. Mit der Kette 102 sind die aneinandergereihten Abschnitte 110 vermittels Karbinerhaken 104 verbunden, die in den Abschnitten vorhandene Oesen 106 durchsetzen. Die Abschnitte 110 weisen im flächig ausgebreiteten Zustand die Form von gleichschenkligen Trapezen auf. Dabei verlaufen die Schenkelseiten 112, entlang welchen benachbarte Abschnitte 110 ebenfalls mittels Karabinerhaken 104 und Oesen 106 miteinander verbunden sind, etwa radial zu einem Mittelpunkt P. Der Winkel α , den die Schenkelseiten 112 miteinander einschliessen, ist in 360° nicht ganzzahlig teilbar. Die Abschnitte 110 kommen damit in benachbarten wendelförmigen Umgängen im Ringraum nicht zur Deckung und mithin liegen die zwischen den Abschnitten gebildeten Bandunterbrüche 114 in benachbarten Umgängen in Umfangsrichtung zueinander versetzt. Allfällig nicht schon in einem oberen Umgang des Bandes 10 erfasstes Schlammwasser wird mithin im nächst unteren Umgang auf jeden Fall erfasst.

Um den Mittelpunkt P sind konzentrische Kreisbogen 115 und 116 geschlagen, die etwa dem Aussendurchmesser des Innenmantels 55 bzw. dem Innendurchmesser des Aussenmantels 70 entsprechen. Offensichlich ist die Länge der Schenkelseiten 112 grösser als der Unterschied dieser beiden Durchmesser, so dass zumindest die Flächen 11, die Längsränder des Bandes 10 darstellen, im Ringraum 74 umgebogen verlaufen.

Die Trapezform der Abschnitte 110 als blosse Näherung an ein für die Verlegung im Ringraum ideales Ringsegment ist durch die Herstellung bzw. den Zuschnitt derselben aus bandförmigem Material mit einer Breite entsprechend der Höhe 118 begründet. Solche Abschnitte lassen sich ohne grossen Aufwand für den Zuschnitt und ohne Abfall herstellen. Ein geringfügiger Mehraufwand kann gegebenenfalls in Kauf genommen werden, wenn die Abschnitte 110 entlang den gestrichelten Linien 120 nachträglich begrenzt werden. Das Material der Abschnitte ist ein dreilagiges Transmissivitätspaket mit zwei äusseren Filterlagen und einer mittleren Ableitlage, wobei alle Lagen aus Faservlies bestehen. Grundsätzlich können am Filtrieren und Ableiten auch mehr als drei Lagen beteiligt sein, z.B. für das Filtrieren je mehrere Lagen unterschiedlicher Dichte bzw. Feinheit eingesetzt werden.

Im längsgestreckten Zustand des Bandes 10 bilden sich mit zunehmendem Abstand von der Kette 102 grösser werdende Falten 108 in den Abschnitten 10, denen die Querschnitte der Austrittsöffnung 46 und des Schachtes 18 angepasst sind. Jedoch wirken sich diese Falten für den Transport in den geraden Abschnitten der Führungsbahn 8 nicht störend aus.

Zum Aufbau der Vorrichtung bleibt nachzutragen, dass auf das über dem Austragtisch 14 in der unmittelbarer Nachbarschaft der Austrittsöffnung 46 mit einem nicht dargestellten Antrieb verbundene Tranportwalzen 140 vorgesehen sind, die mit den Abschnitten 110 des Bandes 10 zusammenwirken und durch Reibung eine Vortriebskraft ausüben. Weiterhin sei darauf hingewiesen, dass die Austrittsöffnung 46 nach oben und nach den Seiten von einer Traufe 142 (Fig. 4) umgeben ist, die aus der Auskleidung 76 austretendes Schlammwasser auffängt und ausserhalb der Schlammschicht S ableitet.

Nunmehr soll die Inbetriebsetzung und die Wirkungsweise der Vorrichtung näher erläutert werden:

Vor der ersten Inbetriebsetzung wird das Band 10 in noch offenem Zustand mit seinem Anfang auf dem Einlaufabschnitt 12 angeordnet, nachdem dieser Anfang durch den Steigschacht 18 hindurchgezogen wurde. Der Anfang 130 des Bandes 10 besitzt, wie aus Fig. 6 ersichtlich, ein freies Kettenstück 132. Der Boden 57 wird durch Verschieben des Innenmantels 55 um die Hubhöhe 56 in seine obere Endlage verbracht.

Der zum Innenmantel 55 tangentiale Anfang 130 des Bandes 10 wird mit seinem durch die Einführstrecke 88 verlaufenden Ende einerseits mit seinem ersten Abschnitt 110 und andererseits mittels dem freien Kettenstück 132 an normalerweise versenkt liegenden, bei Gebrauch jedoch überstehenden Mitnehmerbolzen 136 bzw 138 des Bodens 57 festgelegt. Beim Verlegen des Bandes 10 auf dem Boden 57 innerhalb der radialen Abmessung des Ringraumes 74 nimmt dieses durch Aufbiegen der Ränder einen trogförmigen Querschnitt an. Das Kettenstück 132 verläuft entlang des Abstreifbalkens 58 zum Mitnehmerbolzen 138, während die ersten Abschnitte 110 unter der Platte 56 zu liegen kommen. Die Platte 56 ist für den Füllvorgang durch temporär eingesetzte Stützen am Boden 57 in horizontaler Lage abgestützt.

Beginnen bei der Inbetriebnahme der Vorrichtung die Mäntel 55 und 70 und der Boden 57 sich zu drehen, so wird Band 10 fortlaufend in den Ringraum 74 eingeführt, wobei die Kette 102 als Führungsorgan dient. Durch die gleichzeitig mit dem Beginn der Drehung beginnende Schlammaufgabe durch das Förderband 80 an der Aufgabestelle 82 wird angrenzend an die Platte 56 mit der Bildung der Schlammschicht S auf dem Band 10 begonnen. Der sich nach einer entsprechenden Drehung bildende Umgang des Bandes verläuft über der Platte 56.

Beim Absenken des Bodens 57 während der Drehung erhalten Band 10 und Schlammschicht S den beschriebenen wendelförmigen Verlauf im Ringraum 74. Die Steigung der Wendel entspricht einer angestrebten Dicke der Schlammschicht S und dieser ist die vom Förderband 80 zugeführte Schlammenge angepasst. Während des Absenkens des Bodens 57 drehen sich Abstreifbalken 58 und Platte 56 mit diesem mit.

Hat der Boden 57 sich um die Hubhöhe H abgesenkt und dabei seine untere Endlage gemäss Fig. 3 erreicht, so werden sowohl der Hubmechanismus als auch der Antrieb der Antriebsachse 48 und des Förderbandes 80 stillgesetzt. Kettenstück 132 und erster Abschnitt 110 des Bandes 10 werden von den Mitnehmerbolzen 136 und 138 abgehängt, was bei Verdrehung bis vor die Austrittsöffnung 46 möglich ist. Im Stillstand wird der Riegel 61 in den Abstreifbalken 58 eingeschoben und dieser mithin in der Verlängerung des Führungsbalkens 60 blockiert. Hierdurch erfolgt ebenfalls eine Blockierung der Platte 56 in dem vor der Austrittsöffnung 46 liegenden Umfangsbereich.

Bei der weiteren Drehung der den Ringraum begrenzenden Teile schiebt sich der Anfang 130 des Bandes 10 entlang des Abstreifbalkens 58 aus der Austrittsöffnung und folgt anschliessend dem Führungsbalken 60. Der Austritt des Anfanges 130 aus dem Ringraum, der unter der nunmehr stationären Platte 56 hindurch erfolgt, wird vermittels der innersten Transportwalze 140 unterstützt, wobei vermittels des Kettenstückes 132 die Führung des Bandes nach erfolgtem Austritt bewerkstelligt werden kann. Die weiteren Transportwalzen 140 übernehmen ebenfalls Führungsfunktion für die Abschnitte 110 und können zur Bewältigung der nach aussenhin zunehmenden Materiallänge mit ensprechend höherer Drehzahl als die innerste Transportwalze angetrieben sein. Sobald der Anfang 130 den Bereich 22 verlassen hat, kann dieser mit dem Ende des Bandes 10 verbunden werden.

Diese Verbindung kann durch das Einhängen der entsprechenden Karabinerhaken 104 in Oesen 106 hergestellt werden, was entweder bei ausgeschaltetem oder infolge der sehr kleinen Transportgeschwindigkeit auch bei eingeschaltetem Antrieb erfolgen kann. Jedenfalls kann die Vorrichtung nunmehr selbsttätig arbeiten und es ist lediglich eine Ueberwachung derselben und insbesondere eine regelmässige Inspektion des Zustandes des Bandes erforderlich. Dabei können gegebenenfalls beschädigte Abschnitte 110 desselben während des Betriebes ausgewechselt werden.

Im Betrieb wird das Band 10 auch ausserhalb des Turmes im Umlauf gehalten und auch das Transportband 80 wird angetrieben. Durch nicht dargestellte Mittel wird dieses Transportband 80 laufend mit Schlamm beladen, der an der Aufgabestelle 82 auf das Band 10 gelangt. Zusammen mit dem Gewicht dieses Schlammes erzeugt das auf der obersten Schlammschicht S aufliegende Gewicht 90, das sich dementsprechend mit den den Rinraum begrenzenden Teilen mitdreht, in allen Schichten einen beschränkten Verdrängungsdruck, der den Austritt von Schlammwasser aus dem Inneren der Schichten in die dem Band benachbarten Zonen unterstützt. Aus diesen Zonen tritt das Schlammwasser dann in das Band über, wobei die Filterlagen des Transmissivitätspaketes die Schlammbestandteile weitgehend zurückhalten.

Das Schlammwasser aus dem Band 10 tritt in die Auskleidungen 76 und 78 über und wird von diesen nach unten abgeleitet, um danach durch die im Boden 62 vorgesehenen Durchtrittsöffnungen 63 den Ringraum 74 zu verlassen. Ueber die Sammelrinne 65 gelangt das Schlammwasser in das Ablaufsystem 66.

Um einen Stau von Schlamm an der Austrittsöffnung 46 zu vermeiden, weist diese eine Höhe auf, die grösser ist als die Dicken von Band 10 und entwässerter Schlammschicht S. Der Austritt des Bandes 10 aus den Turm wird duch die Last der Schlammsäule und des Gewichtes 90 nicht behindert, da die Platte 56 diese Last im Umfangsbereich der Austrittsöffnung oberhalb derselben abfängt und unmittelbar in den Boden 57 überleitet. Das aus dem Turm austretende Band 10 trägt stichfesten Schlamm mit einer Trockensubstanz, die je nach Schlammart und Ausgangsmaterial etwa zwischen 60 und 80% liegt. Wenn das Band 10 den Austragtisch 14 erreicht hat, wird im Bereich 24 die Entladevorrichung wirksam und der auf dem Band befindliche, entwässerte Schlamm wird nach der Seite abgeworfen. Die im Bereich 24 vorgesehenen Abstreiforgane 30 befreien das Band 10 von anhaftenden Schlammklumpen, während eine Reinigung desselben durch Waschen bei der kontinuierlichen Weiterbewegung vermittels der im Bereich 26 vorgesehenen Sprühdüsen 34 vorgenommen wird. Beim Aufsteigen des Bandes 10 durch den Schacht 18 kann in den Vlieslagen noch verbliebenes Waschwasser abfliessen. Ueber den Einlaufabschnitt 12 gelangt das gereinigte Band 10 erneut in den Ringraum 74 im Turm 2, um an der Aufgabestelle 82 wiederum mit Schlamm beladen zu werden.

Es wurde schon darauf hingewiesen, dass das die Schlammschicht belastende Gewicht 90 mitdreht. Nach Zurücklegung eines dem Schrittschaltweg 98 entsprechenden Drehwinkels wird das Gewicht 90 durch die Hubmechanismen der Laufkatzen 94 angehoben und mittels deren Fahrantrieben um den Schrittschaltweg 98 entgegen der Drehrichtung der Antriebsachse 48 zurückbewegt. Hierauf wird das Gewicht 90 wieder auf die Schlammschicht S abgesetzt. Der Sinn dieser Massname ist, den Durchtritt des Bandes 10 und des Schlammes durch die Aussparung 91 dauernd zu ermöglichen und jeweils neu gebildete Bereiche der Schlammschicht der Presswirkung des Gewichtes auszusetzen. Der Schrittschaltweg 98 ist im Verhälnis zur Aussparung 91 im Gewicht 90 so gewählt, dass für die Schlammaufgabe an der Aufgabestelle 82 und die Einführstrecke 88 in beiden Endstellungen des Gewichtes genügend Raum für den Durchtritt durch diese Aussparung verbleibt.

Gemäss der Erfindung ist auch möglich, in den Auskleidungen 76 und 78 gesammeltes Schlammwasser schon aus dem Ringraum 74 abzuleiten, noch bevor dieses dessen unteres Ende erreicht hat. Eine solche Massnahme kann unter gegebenen Umständen dazu beitragen, die Behandlungszeit zu verkürzen und/oder höhere Trockensubstanzwerte zu erreichen. Zu diesem Zweck können sowohl im Aussenmantel 70 wie auch im Innenmantel 55 Durchbrechungen vorgesehen sein und zwar mindestens im Bereich der obersten Schichten S bzw. der obersten Umgänge des Bandes 10. Zweckmässigerweise sind hierzu an den dem Ringraum zugekehrten Mantelseiten ringförmige Traufen angeordnet, die Längsabschnitte der Auskleidungen 76 bzw. 78 aufnehmen. Die Durchbrechungen sind den Traufen zugeordnet und das in diesen gesammelte Schlammwasser kann aus dem Ringraum 74 austreten und danach an der Aussenseite des Aussenmantels 70 bzw. zwischen Innenmantel 55 und Antriebsachse 48 nach abwärts abströmen. Der Aussenmantel 70 kann von einem Tropfblech umgeben sein, das über eine stationäre Ringtraufe mit dem Ablaufsystem 66 verbunden ist. Das zwischen Innenmantel 55 und Antriebsachse 48 abströmende Schlammwasser gelangt über die Sammelrinne 65 in das Ablaufsystem 66.

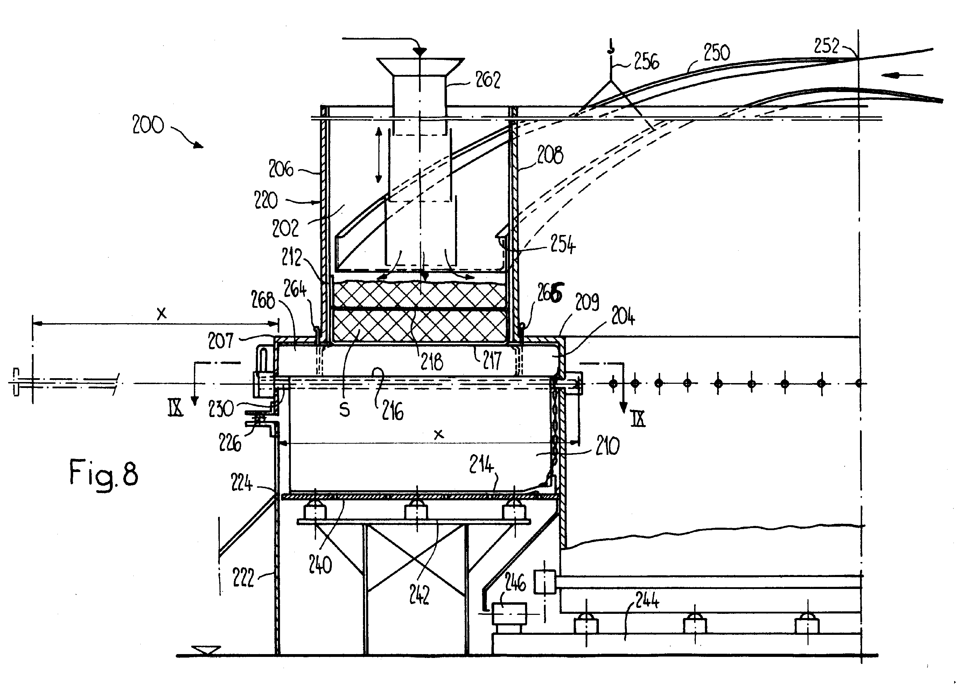

Das in den Fig. 8 bis 10 dargestellte Ausführungsbeispiel stellt eine bevorzugte Ausgestaltung eines Entwässerungsturmes 200 dar. Soweit nichts anderes erwähnt ist, entspricht dieser, wie auch die übrige Vorrichtung, dem Ausführungsbeispiel nach Fig. 1 bis 7. Aus Fig. 8 ist ersichtlich, dass der Ringraum 202 an seinem unteren Ende eine radiale Erweiterung 204 umfasst, die durch Absetzungen 207 und 209 des Aussenmantels 206 bzw. des Innenmantels 208 gebildet ist. Die Aussenwand 220 des Turmes weist wiederum einen durch eine stationäre Stehzarge 222 gebildeten unteren Teil auf, der im Durchmesser der Absetzung 207 entspricht und die Austrittsöffnung 224 für entwässerten Schlamm und das Band 210 enthält. Die Erstreckung der Austrittsöffnung 224 in Umfangsrichtung der Stehzarge 222 ist so gewählt, dass das flach gelegte Band 210 in seiner Breite ungehindert durch diese tangential austreten kann. Der Boden 230 ist oberhalb der Austrittsöffnung 224 in der Erweiterung 204 des Ringraumes 202 vorgesehen und stützt sich am Innenmantel 208 und am Aussenmantel 206 ab. Dabei ist der Aussenmantel 206 über ein bei 226 angedeutetes Lager auf der Stehzarge 222 abgestützt und koaxial zum Innenmantel 208 drehbar geführt.

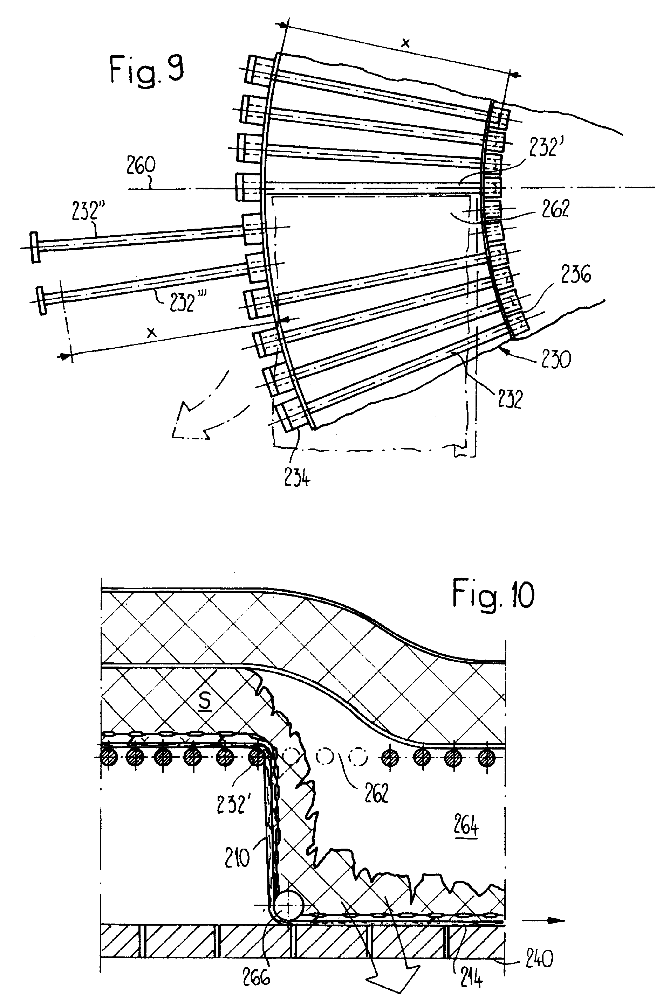

In seinem Aufbau ist der Boden 230 aus in radialer Richtung verschiebbaren, über den Umfang des Ringraumes 202 gleichmässig verteilten, radial angeordneten Roststäben 232 gebildet. Wie aus den Fig. 9 und 10 deutlicher ersichtlich, sind diese Roststäbe 232 bei 234 bzw. 236 am Aussenmantel 206 und am Innenmantel 208 verschiebbar gelagert und aus einer Betriebslage (in Fig. 8 in ausgezogenen Linien dargestellt) in eine Oeffnungslage (strichpunktiert dargestellt) in radialer Richtung beweglich. Für diese Bewegung können nicht dargestellte, manuell oder motorisch betriebene Verschiebemittel für jeden Roststab 232 vorgesehen sein. Der Zweck dieser Verschiebbarkeit wird weiter unten erläutert werden.

Unterhalb des Bodens 230 ist eine begehbare Bühne 240 etwa auf der Höhe der unteren Begrenzung der Austrittsöffnung 224 angeordnet, die mit dem Innenmantel 208 starr verbunden ist und die dessen Gewicht mindestens teilweise von einem schematisch dargestellten Lagertisch 242 übernehmen lässt. Eine weitere Lagerung des Innenmantels, die auch in radialer Richtung wirksam sein kann, ist bei 244 angedeutet. Mit 246 ist eine Antriebseinheit bezeichnet, die mit dem Innenmantel 208 in Antriebsverbindung steht. Der Aussenmantel 206 ist mit diesem durch nicht dargestellte Mittel synchron angetrieben.

Im Unterschied zum Ausführungsbeispiel nach den Fig. 1 bis 7 sind Innenmantel 208 und Boden 230 für das Anfahren der Vorrichtung, d.h. das Aufbauen der Säule aus eine Schlammschicht tragenden wendelförmigen Umgängen im Ringraum 202 nicht axial verschiebbar bzw. anhebbar. Statt dessen ist für die Einführung des Bandes 210 in den Ringraum 202 auf eine variable Höhe eine kreisbogenförmig gekrümmte Führungsrinne 250 vorgesehen, die z.B aus ineinanderschiebbaren Segmenten gebildet ist. Oberhalb des Turmes 200 ist diese Führungsrinne 250 bei 252 schwenkbar gehalten und deren Abgabeende 254 ist mittels Hebemittel 256 abgestützt und über die Höhe des Ringraumes 202 absenkbar und anhebbar. Die Führungsrinne 250 weist einen trogförmigen Querschnitt auf und erzeugt während der Bewegung des Bandes 210 durch diese unter Aufbiegen der Längsränder 212 eine Querschnittsform, die der im Ringraum verlegten und in Fig. 8 dargestellten entspricht.

Der Anfang des Bandes 20 kann somit in durch die Führungsrinne 250 geführter Weise bis zum Boden 230 hinab geleitet werden. Auf dem Boden angelangt, wird der Bandanfang zwischen zwei benachbarten Roststäben 232 hindurch zur Bühne 240 hinabgeleitet. Eine oberhalb der Bühne 240 stationär gehaltene, jedoch drehbar gelagerte radiale Rolle 266, die zur Umlenkung des Bandes dient, hält den Bandanfang als Lage 214 auf der Bühne 240. Die Führungsrinne 250 wird nach Massgabe des Anwachsens der Säule aus wendelförmigen Umgängen mit ihrem Abgabeende 254 angehoben und verkürzt. In Fig 8 sind drei schon gebildete Umgänge des Bandes 210 dargestellt, wobei im Unterschied zur Lage 214 die Umgänge 216, 217 und 218, die die in Bildung begriffene Säule ausmachen, mit Schlamm beladen dargestellt sind.

Mit dem Anfahrvorgang kann begonnen werden, sobald die Lage 214 gebildet ist und mit der Verlegung des Umganges 216 unter Inbetriebsetzung der Antriebseinheit 246 und der Antriebsmittel für den Aussenmantel begonnen wurde. Alle Roststäbe 232 befinden sich zur Abstützung der sich bildenden und mit Schlamm zu beladenden Umgänge in der Betriebslage. Die Aufgabestelle des Schlammes befindet sich zu Beginn des Anfahrens unmittelbar über dem auf dem Boden 230 befindlichen Umgang 216 und erfolgt durch ein etwa vertikal angeordnetes, teleskopisch nach abwärts verlängerbares Rohr 262. Dieses wird mit dem Anwachsen der Säule, wie in Fig. 8 dargestellt, ebenfalls angehoben und gestattet auch während des Anfahrvorganges, d.h. bis die Säule ihre betriebsmässige Höhe erreicht hat, die Bildung einer gleichmässigen Schlammschicht S auf dem entsprechenden Umgang des Bandes 210. Es bleibt nachzutragen, dass die Erweiterung 204 so dimesnioniert ist, dass diese die ebenfalls flach auf dem Boden 230 aufliegenden Längsränder 212 aufnehmen kann und überdies oberhalb des Bodens 230 in einem Abstand endet, der gerade ausreicht, um die Ausbreitung der im Ringraum 202 noch aufgebogen gehaltenen Längsränder auf dem Boden zu ermöglichen.

Für den Anfahrvorgang ist die Erweiterung 204 mit an seinem Umfang regelmässig verteilten, achsparallel verlaufenden Vertikalschiebern 264 und 266 und einem radial verlaufenden Horizontalschieber 268 versehen, wobei die ersteren im Aussenmantel bzw. im Innenmantel und der letztere im Aussenmantel verschiebbar geführt sind. Die in der Anfahrlage dargestellten Vertikalschieber 264 und 266 halten die Längsränder 212 des Bandes im Umgang 216 noch aufgebogen. Damit wird verhindert, dass noch nicht entwässerter Schlamm sich aus dem Umgang 216 seitlich entleert und über den Boden 230 auf die Bühne 240 abfliesst. Mit dem Horizontalschieber 268 wird in dessen dargestellter Anfahrlage das Abfliessen von Schlamm in Richtung des Umganges 216 verhindert.

Die Schieber 264, 266 und 268 sind für den normalen Entwässerungsbetrieb der Vorrichtung, d.h., wenn der Anfahrvorgang abgeschlossen ist, in eine Ruhelage ausserhalb des Querschnittes der Erweiterung 204 rückziehbar. Dieser Betrieb wird nachfolgend anhand der Fig. 9 und 10 erläutert.

Während der als im Gegenuhrzeigersinn (Fig. 9) angenommenen Drehung des Bodens 230 wird an der mit 260 bezeichneten Umfangsstelle der Rückzug des dort befindlichen Roststabes 232' aus der Betriebslage eingeleitet. Die Umfangsstelle 260 befindet sich, in Drehrichtung des Bodens 230 betrachtet, beim Beginn der Austrittsöffnung 224. Bei der weiteren Drehung des Bodens 230 wird dieser Roststab in die für die Roststäbe 232'' und 232''' dargestellte Oeffnungslage gebracht. Durch den anschliessenden, in der Oeffnungslage der Roststäbe 232'' und 232''' gebildeten Spalt 262 hindurch tritt das Band 210 mit der unter dem Einfluss der Last der Säule inzwischen entwässerten Schlammschicht S in eine nicht unter dem Druck der Säule stehende Zone 264, die nach abwärts durch die Bühne 240 begrenzt ist. Hat der Roststab 232' die Oeffnungslage erreicht, so wird der Roststab 232'' in die Betriebslage zurückgeführt usw. Jedenfalls wird in dieser Weise trotz ununterbrochener Drehung des Bodens 230 anschliessend an die Umfangsstelle 260 der Spalt 262 aufrechterhalten und damit dem Band 210 der Durchtritt an einer stationären Umfangsstelle ermöglicht. Ueber die Rolle 266 wird das Band umgelenkt und anschliessend als Lage 214 etwa tangential zum Innenmantel 208 in schon beschriebener Weise durch die Austrittsöffnung 224 aus dem Turm 200 herausgeführt. Als Folge des Durchtrittes des Bandes 210 durch den Spalt 262 fällt der stichfeste Schlamm aus dem Umgang 216 brockenweise auf die Lage des Bandes 214 hinunter und wird mit diesem in aufgelockerter Form aus dem Turm 202 heraus transportiert.

Damit wird das Ziel ereicht, den Austritt des Schlammes mit dem Band aus dem Turm drucklos und damit auch für das letztere störungsfrei zu ermöglichen. Der noch unter Druck erfolgende Durchtritt durch den Boden 230 wird durch die über dem schmalen Spalt 262 liegenden Umgänge nicht behindert.

Im normalen Entwässerungsbetrieb erfolgt die Einleitung des Bandes und die Aufgabe von Schlamm auf die sich fortlaufend neu bildenden Umgänge des Bandes in der Nachbarschaft des oberen Endes des Ringraumes 202. Ein auch bei dieser Ausführungsform vorhandenes Gewicht ist aus Gründen der Uebersichtlichkeit nicht dargestellt. Anstelle eines einstückigen Gewichtes kann dieses auch in sektorfömige Teilgewichte unterteilt sein. Dabei kann es zweckmässig sein, diese Teilgewichte beim Umlauf des Ringraumes jeweils vor dem für das Zuführen des Bandes und die Aufgabe von Schlamm freizuhaltenden Umfangsbereich z.B. radial wegzuführen und nach diesem Umfangsbereich im Ringraum wieder abzusetzen. Eine solche Bewegungsweise hat den energiemässigen Vorteil, dass nur ein Teilgewicht abzuheben und, unabhängig von der Säule, zu transportieren ist.

Während in den vorstehenden Ausführungsbeispielen ein besonderes Gewicht zur Belastung der Säule im Ringraum vorgesehen ist, sei darauf hingewiesen, dass statt dessen eine entsprechend grosse Last mittels zusätzlicher Umgänge in einem höher ausgelegten Ringraum gebildet werden kann. Andererseits ist es auch möglich, bei einer durch das Fehlen des besonderen Gewichtes reduzierten Last eine ausreichende Entwässerung dadurch sicherzustellen, dass die Verweilzeit des Schlammes im Ringraum mittels verringerter Drehzahl verlängert wird.

Anstelle eines mit Mantel und Hohlwelle umlaufenden Bodens kann dieser durch einen nicht umlaufenden Käfig und in diesem radial verlaufende, drehbar gelagerte und über den Umfang verteilte Walzen gebildet sein. Dabei ist im Käfig eine etwa radial verlaufende Durchtrittsöffnung vorgesehen, die den Durchtritt des die Schlammlage tragenden Bandes in die drucklose Zone unterhalb des Bodens ermöglicht. Die Walzen haben vorteilhafterweise eine konische Form mit von Innen nach Aussen zunehmendem Durchmesser und sind in diesem Fall angetrieben. Der Antrieb, der z.B. von der Welle oder dem Mantel abgeleitet sein kann, erfolgt mit einer Drehzahl, die über die Länge einer Walze die geringsten Abweichungen der Umfangsgeschwindigkeit gegenüber den Fördergeschwindigkeiten über die Breite des Bandes ergibt.

Grundsätzlich ist es ebenfalls möglich, die erfindungsgemässe Vorrichtung mit einem Eintritt des gegebenenfalls schon mit Schlamm beladenen Bandes am unteren und einem Austritt am oberen Ende des Turmes zu betreiben. Damit herrscht dort der grösste Druck, wo der Trockensubstanzanteil am kleinsten ist. Allerdings muss hier dafür gesorgt werden, dass dieser Eintritt in den Turm, d.h. die Bildung mindestens eines ersten Umganges drucklos erfolgen kann.

Als endloses Band wird im vorliegenden Zusammenhang ein Gebilde bezeichnet, das kurze Abschnitte von Transmissivitätspaketen umfasst, welche im Ringraum des Turmes wendelförmig aneinandergereiht, bzw. sich gegebenenfalls schuppenförmig überlappend, als Unterlage für die darauf zusammenhängend aufgebrachte Schlammlage dienen und deren Umgänge voneinander trennen. Da die so gebildete Säule im Ringraum relativ zu den etwa vertikalen Begrenzungen desselben sich als Ganzes und lediglich vertikal bewegt, bedürfen die Abschnitte nicht zwingend einer Verbindung. Eine Verbindung der Abschnitte untereinander, entweder über ein endloses Verbindungsorgan oder unmittelbar von Abschnitt zu Abschnitt, kann im Ringraum lediglich den Sinn haben, deren vorerwähnte Orientierung zueinander auch dann sicherzustellen, wenn infolge Beschaffenheit des Schlammes oder Gegebenheiten seiner Aufgabe mit einer Schlammlage von etwa einheitlichem Entwässerungsverhalten nicht gerechnet werden kann. Ausserhalb des Ringraumes kann eine solche Verbindung der Abschnitte selbstverständlich einen umlaufenden Transport vereinfachen. Alternativ lässt sich der Transport der Abschnitte ausserhalb des Ringraumes ausschliesslich durch von diesen unabhängige Mittel, wie z.B durch eine mit Greifern versehene Transportkette bewerkstelligen, so, dass auch hier auf eine Verbindung der Abschnitte untereinander verzichtet werden könnte. Für die Erfüllung ihrer Aufgabe im Ringraum wäre eine Ausgestaltung der Abschnitte als Ringsegmente gegebenenfalls mit das Aufbiegen von Rändern erleichternden Einschnitten ideal, jedoch kann von dieser Idealform wie dargestellt abgewichen werden.

Die erfindungsgemässe Vorrichtung lässt sich nicht nur für die Entwässerung von Erdschlämmen, sondern auch für jene von anderen schlammartigen Materialien anwenden. Die Entwässerung von Klärschlämmen und jene von Schlick (Meerschlamm) ist möglich.

## Patentansprüche

1. Vorrichtung zum Entwässern von Schlamm, insbesondere Erdschlamm, mit einem Entwässerungsturm, einem durch diesen verlaufenden, eine Schlammschicht tragenden Band, das durch einen Ringraum in wendelförmigen Umgängen verläuft, der im Entwässerungsturm zwischen einer zylinderförmigen Aussenwand, einem zu dieser koaxialen, zylindrischen Innenkörper und einem Boden begrenzt ist, wobei der Innenkörper drehbar gelagert und angetrieben ist und der Boden treibend auf das Band einwirkt und der Entwässerungsturm Oeffnungen für den Eintritt und den Austritt des Bandes aufweist, dadurch gekennzeichnet, dass das Band (10, 210) in eine Vielzahl von sich in Bandrichtung folgenden einzelnen Abschnitten unterteilt ist, dass die Aussenwand (3, 220) einen drehbar gelagerten Aussenmantel (70, 206) für den Ringraum (74, 202, 204) umfasst, der bezüglich des Innenmantels (55, 208) mit gleicher Drehzahl angetrieben ist, und dass eine der Oeffnungen (46, 224) in einem unteren stationären Teil (40, 222) der Aussenwand vorgesehen ist.

2. Vorrichtung nach Anspruch 1, dadurch gekennzeichnet, dass oberhalb der dem stationären Teil(40, 222) der Aussenwand (3, 220) zugeordneten Oeffnung (46, 224) sich radial vom Innenmantel (55, 208) bis zur Aussenwand (3, 206) und in Umfangsrichtung mindestens über die Umfangserstreckung dieser Oeffnung erstreckende Lastabfangmittel (56, 230) vorgesehen sind und dass Innenmantel und Aussenmantel(70, 206) Durchbrechungen zum Ableiten von gesammelter Flüssigkeit aufweisen.

3. Vorrichtung nach Anspruch 2, dadurch gekennzeichnet, dass die Lastabfangmittel (230) durch den Boden gebildet sind und die Oeffnung (224) im stationären Teil (222) die Austrittsöffnung ist, dass Mittel (262) vorgesehen sind, um den Durchtritt des Bandes (210) durch den Boden zu ermöglichen und dass der Ringraum (202) im Bereich des Bodens eine radiale Erweiterung (204) aufweist.

4. Vorrichtung nach einem der Ansprüche 1 bis 3, dadurch gekennzeichnet, dass der drehbare Boden (230) über seinen Umfang verteilt radial verlaufende Roststäbe (323) aufweist, die in ihrer Längsrichtung verschiebbar geführt sind.

5. Vorrichtung nach einem der Ansprüche 1 bis 3, dadurch gekennzeichnet, dass der Boden über seinen Umfang verteilt radial verlaufende, in einem Käfig drehbar gelagerte Walzen umfasst und eine etwa radiale Durchtrittsöffnung für das Band besitzt.

6. Vorrichtung nach einem der vorangehenden Ansprüche, dadurch gekennzeichnet, dass zur Bildung der Umgänge im Ringraum (202) in diesen ausfahrbare Mittel(250, 262) zur Führung des Bandes und zur Aufgabe von Schlamm oberhalb des Entwässerungsturmes (200) vorgesehen sind.

7. Vorrichtung nach einem der Ansprüche 1 bis 4, dadurch gekennzeichnet, dass der Innenmantel (55, 208) mit dem Boden (57, 230) drehstarr verbunden ist.

8. Vorrichtung nach einem der vorangehenden Ansprüche, dadurch gekennzeichnet, dass der Aussenmantel (70, 206) auf dem als Stehzarge (40, 222) ausgebildeten stationären Teil drehbar gelagert ist.

9. Vorrichtung nach einem der vorangehenden Ansprüche, dadurch gekennzeichnet, dass im Ringraum (74) ein Belastungsgewicht (90) wirkt, das mit einer über dem Entwässerungsturm (2) angeordneten Hebeeinrichtung (94) verbunden ist.

10. Vorrichtung nach Anspruch 9, dadurch gekennzeichnet, dass das Belastungsgewicht (90) ein Ringsegment bildet, wobei in dessen Ausnehmung (91) eine Aufgabestelle (82) liegt, zu welcher das Band (10) über Umlenkwalzen (86) in den Entwässerungsturm (2) eingeführt ist und wobei über der Aufgabestelle eine vorzugsweise als umlaufendes Transportband ausgebildete Transporteinrichtung (80) endet.

11. Vorrichtung nach einem der vorangehenden Ansprüche, dadurch gekennzeichnet, dass eine Entladestelle an einem einen Rüttler aufweisenden, vorzugweise geraden Bahnabschnitt (22) für das Band (10) ausserhalb des Entwässerungsturmes (2) vorgesehen ist.

12. Vorrichtung nach einem der vorangehenden Ansprüche, dadurch gekennzeichnet, dass jeder Abschnitt (110) im Ringraum (74) angenähert radial verlaufenden Begrenzungen (112) aufweist, die zwischen sich einen Winkel einschliessen, der in 360° nicht ganzzahlig teilbar ist.

## Claims

1. An apparatus for the removal of water from sludge, in particular ground sludge, with a dewatering tower, a belt extending through the latter, carrying a layer of sludge and passing in helical turns through an annular space which is delimited in the dewatering tower between a cylindrical outer wall, a cylindrical inner body that is coaxial therewith and a floor, in which arrangement the inner body is mounted and driven for rotation and the floor exerts a driving action on the belt, and the dewatering tower has openings for the entry and exit of the belt, characterized in that the belt (10, 210) is subdivided into a plurality of individual sections following one another in the direction of the belt, that the outer wall (3, 220) comprises a rotatably mounted outer shell (70, 206) for the annular space (74, 202, 204) which is driven at the same rotational speed as compared with the inner shell (55, 208), and that one of the openings (46, 224) is provided in a lower stationary part (40, 222) of the outer wall.

2. An apparatus according to claim 1, characterized in that above the opening (40, 224) assigned to the stationary part (40, 222) of the outer wall (3, 220), provision is made for load absorbing means (56, 230) extending radially from the inner shell (55, 208) as far as the outer wall (3, 220), and in the circumferential direction at least over the circumferential reach of this opening, and that the inner shell and outer shell (70, 206) have openings for the drainage of collected liquid.

3. An apparatus according to claim 2, characterized in that the load absorbing means (230) are formed by the floor, and that the opening (224) in the stationary part (222) is the exit opening, that provision is made for means (262) to allow the belt (210) to pass through the floor, and that the annular space (202) has a radial widened portion (204) in the zone of the floor.

4. An apparatus according to one of claims 1 to 3, characterized in that the rotatable floor (230) has, distributed over its circumference, radially extending grid rods (323) which are carried for displacement in their longitudinal direction.

5. An apparatus according to one of claims 1 to 3, characterized in that the floor has, distributed over its circumference, rollers that are mounted for rotation in a cage, and an approximately radial passage opening for the belt.

6. An apparatus according to one of the preceding claims, characterized in that for forming the turns in the annular space (202), provision is made for means (250, 262) that can be moved out into the latter, for guiding the belt and for feeding sludge above the dewatering tower (200).

7. An apparatus according to one of claims 1 to 4, characterized in that the inner shell (55, 208) is rigidly connected to the floor (57, 230) for rotation therewith.

8. An apparatus according to one of the preceding claims, characterized in that the outer shell (70, 206) is mounted for rotation on the stationary part designed as a frame stand (40, 222).

9. An apparatus according to one of the preceding claims, characterized in that in the annular space (74) there is acting a loading weight (90) which is connected to a hoisting appliance (94) arranged above the dewatering tower (2).

10. An apparatus according to claim 9, characterized in that the loading weight (90) forms an annular segment, wherein there lies in its recess (91) a feeding point (82) to which the belt (10) is led via guide rollers (86) into the dewatering tower (2), and wherein there terminates above the feeding point a conveyor device (80) preferably designed as a circulating conveyor belt.

11. An apparatus according to one of the preceding claims, characterized in that provision is made for a discharging station having a vibrator, at a preferably straight path section (22) for the belt (10) outside the dewatering tower (2).

12. An apparatus according to one of the preceding claims, characterized in that each section (110) in the annular space (74) has approximately radially extending boundaries (112) which between them form an angle that is not divisible into 360° in terms of integral divisors.

## Revendications

1. Dispositif pour déshydrater une boue, notamment une boue de terre, comprenant une tour de déshydratation, une bande portant une couche de boue qui circule à travers cette tour, et qui circule en spires hélicoïdales dans un espace annulaire qui est limité, à l'intérieur de la tour de déshydratation, entre une paroi extérieure cylindrique, un corps intérieur cylindrique coaxial à cet paroi et un fond, le corps intérieur étant monté rotatif et étant entraîné, et le fond exerçant une force d'entraînement sur la bande, et la tour de déshydratation présentant des ouvertures pour l'entrée et la sortie de la bande, caractérisé en ce que la bande (10, 210) est subdivisée en un grand nombre de segments individuels qui se suivent dans la direction de la bande, en ce que la paroi extérieure (3, 220) comprend une surface latérale extérieure (70, 206) montée rotative qui limite l'espace annulaire (74, 202, 204), qui est entraînée à la même vitesse angulaire que la surface latérale intérieure (55, 208) et en ce qu'une des ouvertures (46, 224) est prévue dans une partie stationnaire inférieure (40, 222) de la paroi extérieure.

2. Dispositif selon la revendication 1, caractérisé en ce qu'au-dessus de l'ouverture (46, 224) associée à la partie fixe (40, 222) de la paroi extérieure (3, 220), sont prévus des moyens d'absorption de charge (55, 230) qui s'étendent radialement de la surface latérale intérieure (55, 208) jusqu'à la paroi extérieure (3, 206) tandis que, dans la direction circonférentielle, ils s'étendent au moins sur toute la dimension circonférentielle de cette ouverture, en ce que la paroi latérale intérieure et la paroi latérale extérieure (70, 206) présentent des ouvertures pour évacuer le liquide collecté.

3. Dispositif selon la revendication 2, caractérisé en ce que les moyens (230) de réception de la charge sont formés par le fond, et l'ouverture (224) est située dans la partie fixe (222) de l'ouverture de sortie, en ce qu'il est prévu des moyens (262) pour permettre le passage de la bande (210) à travers le fond, et en ce que l'espace annulaire (202) présente un élargissement radial (204) dans la région du fond.

4. Dispositif selon une des revendications 1 à 3, caractérisé en ce que le fond tournant (230) présente des barreaux de grille (323) s'étendant radialement et répartis sur sa circonférence, et qui sont guidés mobiles en translation dans leur direction longitudinale.

5. Dispositif selon une des revendications 1 à 3, caractérisé en ce que le fond comprend des rouleaux montés rotatifs dans une cage, qui s'étendent radialement et sont répartis sur la circonférence, et qui possèdent une ouverture de traversée à peu près radiale pour le passage de la bande.

6. Dispositif selon une des revendications précédentes, caractérisé en ce que, pour former les spires dans l'espace annulaire (202), il est prévu des moyens (250, 262) qui peuvent être mis en extension dans cet espace, pour le guidage de la bande et pour le chargement de la boue au-dessus de la tour de déshydratation (200).

7. Dispositif selon une des revendications 1 à 4, caractérisé en ce que la paroi latérale intérieure (55, 208) est reliée solidairement en rotation au fond (57, 230).

8. Dispositif selon une des revendications précédentes, caractérisé en ce que la paroi latérale extérieure (70, 206) est montée rotative sur la partie fixe constituée par un châssis vertical (40, 222).

9. Dispositif selon une des revendications précédentes, caractérisé en ce qu'il comporte un poids de charge (90) qui est relié à un dispositif élévateur (94) agencé au-dessus de la tour de déshydratation (2), et qui agit dans l'espace annulaire (74).

10. Dispositif selon la revendication 2, caractérisé en ce que le poids de charge (90) forme un segment de couronne, cependant que, dans l'évidement (91) de ce segment, se trouve une zone de chargement (82) à laquelle la bande (10) est acheminée dans la tour de déshydratation (2) en passant sur des rouleaux de renvoi (86), et un dispositif transporteur (80), formé de préférence par une courroie transporteuse sans fin, se termine au-dessus de la zone de chargement.

11. Dispositif selon une des revendications précédentes, caractérisé en ce qu'il est prévu une zone de déchargement dans un segment (22) du trajet de la bande (10), à l'extérieur de la tour de déshydratation (2), ce segment étant de préférence rectiligne et présentant un vibrateur.

12. Dispositif selon une des revendications précédentes, caractérisé en ce que chaque segment (110) présente à l'intérieur de l'espace annulaire (74) des limites (112) s'étendant à peu près radialement qui enferment entre elles un angle qui n'est pas contenu un nombre entier de fois dans 360°.
